# FASCICULE DE BREVET EUROPEEN

(11) **EP 0 644 613 B1**
(45) Date de publication et mention de la délivrance du brevet: **08.07.1998**
(21) Numéro de dépôt: 94402078.3
(22) Date de dépôt: 19.09.1994
(51) Int. Cl.: H01R 9/26, H01R 4/24, H04Q 1/14

(54) **Réglette de connexion**
Anschlussleiste
Connecting trip

(30) Priorité: 20.09.1993 FR 9311163
(43) Date de publication de la demande: 22.03.1995
(73) Titulaire: ALCATEL ALSTHOM COMPAGNIE GENERALE D'ELECTRICITE, 75008 Paris (FR)
(72) Inventeur: Maurice, Denis, F-08150 Rimogne (FR); Duboeuf, Jean-Pierre, F-08000 Charleville Mezieres (FR)
(74) Mandataire: El Manouni, Josiane

(56) Documents cités:
- EP-A- 0 220 884
- BE-A- 1 000 234
- US-A- 5 083 941

## Description

La présente invention porte sur une réglette de connexion destinée à assurer le raccordement de lignes notamment téléphoniques à des jarretières.

Cette réglette de connexion est du type comportant des connecteurs de jarretière qui s'enfichent sur un bloc de raccordement, les connecteurs étant équipés de deux contacts auxquels sont raccordés des fils de jarretièrage et le bloc de raccordement d'une pluralité contacts auxquels sont raccordés les conducteurs des lignes.

De telles réglettes qui s'appliquent à la constitution d'une tête de câble ou d'un répartiteur sont connues notamment par le document FR-A- 2 641 154, mais celles-ci sont relativement complexes.

Avantageusement, les contacts peuvent être des contacts hermaphrodites pour leur couplage, qui présentent une fourche autodénudante pour le raccordement d'un conducteur ou d'un fil isolé sur chacun d'eux.

La présente invention a pour but de réaliser une réglette de connexion de ce type, de conception simple permettant de réduire le coût et l'encombrement par rapport aux réglettes actuelles.

Elle a pour objet une réglette de connexion, comportant un bloc de raccordement, équipé d'une rangée de premiers contacts affectés à des paires de conducteurs de ligne, et des connecteurs de jarretière, enfichables sur une face dite avant du bloc de raccordement et équipés chacun de deux deuxièmes contacts affectés à deux fils d'une jarretière, dans laquelle lesdits premiers et deuxièmes contacts sont plats et pourvus chacun d'une fourche autodénudante principale, de raccordement de l'un des conducteurs de ligne à chaque premier contact et de raccordement de l'un des fils de jarretière à chaque deuxième contact, et d'une partie terminale de couplage accessible sur la face avant du bloc, pour les premiers contacts, et sur une face arrière de chaque connecteur, pour lesdits deuxièmes contacts, caractérisée en ce que ledit bloc de raccordement comporte d'une part un corps rectangulaire et plat, d'épaisseur réduite et inférieure à un pas d'assemblage de réglettes superposées, ayant deux faces planes définissant des chemins de câblage et un bord longitudinal rainuré dit bord avant dans lequel lesdits premiers contacts sont retenus côte à côte et ont leur partie terminale de couplage saillante à l'avant dudit bord avant, et d'autre part une série de premières cloisons, solidaires dudit bord avant et saillantes à l'avant et latéralement sur celui-ci, définissant une série de compartiments, d'enfichage desdits connecteurs entre elles et ledit bord avant, et définissant également, transversalement audit bord avant, ledit pas d'assemblage, sensiblement

Cette réglette présente avantageusement en outre au moins l'une des caractéristiques additionnelles suivantes :
- lesdits premiers contacts ont leur fourche autodénudante ouverte en regard de la partie terminale de couplage de chacun d'eux et également saillante sur l'avant dudit bord avant, pour un câblage dit avant desdits conducteurs de ligne sur lesdits premiers contacts.
- ledit bloc de raccordement porte une tige de masse montée latéralement le long dudit bord avant dans une série de fenêtres prévues dans les cloisons.
- les cloisons comportent, sur chacun de leur bord saillant latéralement sur ledit bord avant, une patte terminale, transversale à la cloison et parallèle et couplée à la face correspondante dudit corps.
- lesdits deuxièmes contacts ont leur fourche autodénudante dite principale ouverte en regard de la partie terminale de couplage de chacun d'eux.
- lesdits deuxièmes contacts comportent une autre fourche autodénudante dite de dérivation, ouverte à l'opposé de la partie terminale de chacun d'eux.
- les connecteurs comportent chacun d'une part un fourreau, ayant une partie dite arrière, d'enfichage dans l'un des compartiments, et une partie opposée dite avant, dans lesquelles les deux premiers contacts du connecteur sont retenus côte à côte dans la partie avant et ont leur partie terminale de couplage saillante dans la partie arrière, et d'autre part un plot poussoir, monté coulissant dans ladite partie arrière et au moins partiellement dans ladite partie avant dudit fourreau, le long de la fourche autodénudante des deuxièmes contacts, et pourvu de deux entrées, affectées aux deux fils de jarretière, pour leur raccordement aux fourches autodénudantes des deux deuxièmes contacts, ladite partie avant dudit fourreau ayant une paroi dite inférieure ouverte à travers laquelle lesdits fils sont insérés dans lesdites entrées dudit plot poussoir, pour une position d'ouverture du plot relativement audit fourreau.
- lesdits deuxièmes contacts comportent chacun une autre fourche autodénudante dite de dérivation, ouverte à l'opposé de la partie de couplage de chacun d'eux.
- ledit plot poussoir comporte deux rainures latérales, réalisées chacune dans une face dite latérale du plot et ouvertes toutes deux le long de la face opposée à la face supérieure du plot poussoir et dite inférieure, débouchant dans les deux entrées et sur la face opposée à sa face intérieure et dite arrière.
- ledit plot poussoir comporte en outre, d'une part deux bossages, terminaux et saillants dans la face inférieure ouverte de la partie arrière du fourreau, et d'autre part deux branches, terminales sur la face inférieure dudit plot poussoir mais sensiblement en retrait sur ses deux faces latérales, la face inférieure dudit plot définissant, un relief en T, auquel appartiennent lesdites branches, entre lesdites rainures latérales.
- la réglette comporte en outre des modules de protection, chacun enfichable sur l'un desdits connecteurs et équipé d'une patte de masse saillante latéralement sur une face d'enfichage du module sur le connecteur.

Les caractéristiques et avantages de la présente invention ressortiront de la description faite ci-après en regard des dessins ci-annexés. Dans ces dessins :
- la figure 1 est une vue en perspective éclatée d'une réglette de connexion selon l'invention, à connecteurs enfichables sur un bloc de raccordement,
- les figures 2 et 3 sont des vues en élévation de deux contacts utilisés dans la réglette de la figure 1,
- la figure 4 est une vue en élévation du bloc de raccordement, montré non équipé, de la réglette,
- les figures 5, 6 et 7 sont des vues partielles en élévation selon les flèches V, VI et VII de la figure 4,
- la figure 8 est une vue en coupe du bloc de raccordement, selon la ligne VIII-VIII de la figure 4,
- la figure 9 est une vue en élévation éclatée du connecteur formé d'un fourreau et d'un plot poussoir et équipé de deux contacts,
- la figure 10 est une vue en élévation du fourreau du connecteur, montrant sa face opposée à celle illustrée dans la figure 9,
- la figure 11 est une vue en coupe du fourreau selon la ligne XI-XI de la figure 9,
- la figure 12 est une vue du fourreau, selon la ligne XII-XII de la figure 11,
- la figure 13 est une vue en élévation du plot poussoir du connecteur, montrant sa face opposée à celle illustrée dans la figure 9,
- les figures 14 et 15 sont deux vues en élévation du plot poussoir, selon les flèches XIV et XV de la figure 13,
- la figure 16 est une vue en coupe du plot poussoir, selon la ligne XVI-XVI de la figure 13,
- la figure 17 est une vue en coupe du connecteur de la figure 9, montré assemblé et équipé d'un module de protection,
- la figure 18 est une vue partielle en perspective éclatée d'une variante de réalisation du bloc de raccordement de la figure 1,
- la figure 19 est une vue en élévation, selon la flèche XIX de la figure 18, et en coupe partielle de ce dernier bloc de raccordement.

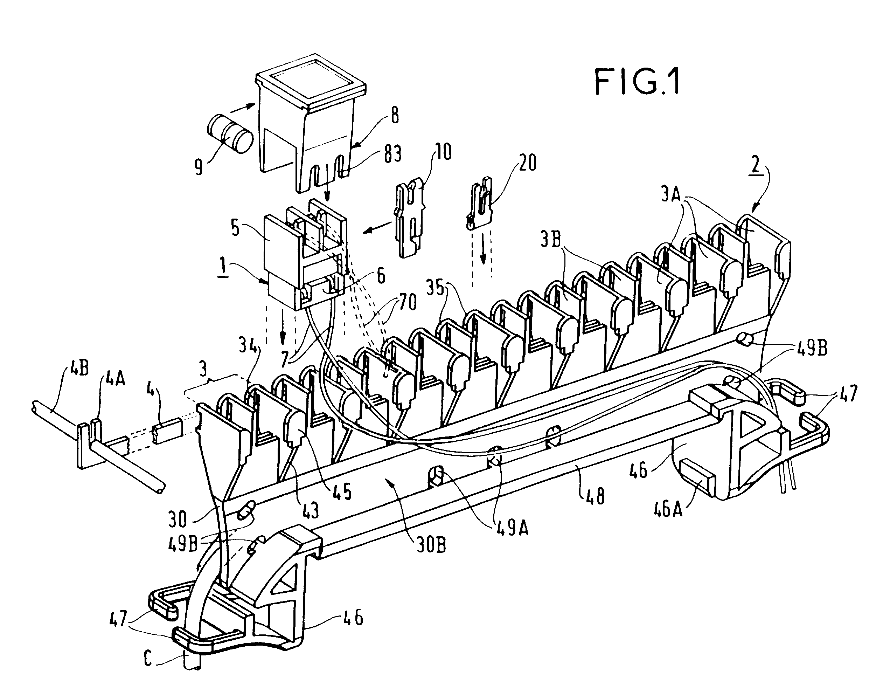

En se référant à la figure 1, on voit que la réglette de connexion selon l'invention est à connecteurs de jarretière, tels que le connecteur 1, qui s'enfichent sur un bloc de raccordement 2. Chaque connecteur 1 est équipé de deux contacts hermaphrodites, tels que le contact 10.

Le bloc de raccordement est quant à lui équipé d'une rangée de contacts hermaphrodites, tels que le contact 20, auxquels se couplent les contacts des connecteurs et se raccordent des lignes d'un câble C.

Ce bloc de raccordement est relativement long et étroit et reçoit les connecteurs, en face avant pour les conditions d'utilisation courantes. Il est divisé en compartiments doubles 3 sur cette face avant d'enfichage, par une série de cloisons, notées alternativement 3A et 3B, qui séparent les contacts 20 les uns des autres, en permettant de différencier les paires successives de contacts, accessibles sur cette face avant. Les compartiments doubles 3 sont ceux définis entre les cloisons 3A, qui sont également celles terminales.

Le bloc 2 reçoit à souhait une tige de masse 4, le long de l'une de ses faces dite face supérieure. Cette tige 4 est pourvue d'une fourche autodénudante 4A, à l'une de ses extrémités, dans laquelle se raccorde un conducteur de masse 4B.

Chaque connecteur 1 comporte un fourreau 5, dans lequel sont maintenus les deux contacts 10, et un plot poussoir 6 de raccordement de deux fils 7 de jarretièrage aux deux contacts 10. Ce plot poussoir 6 est coulissant dans la partie dite arrière du fourreau qui elle-même s'enfiche dans la face avant du bloc 1.

La réglette de connexion comporte, en outre, de manière préférentielle des modules de protection, tels que le module 8, contenant un parafoudre tripolaire 9 ou deux parafoudres bipolaires, qui se montent sur la face avant des connecteurs 1 et se raccordent ainsi aux contacts 10 et également à la tige de masse 4.

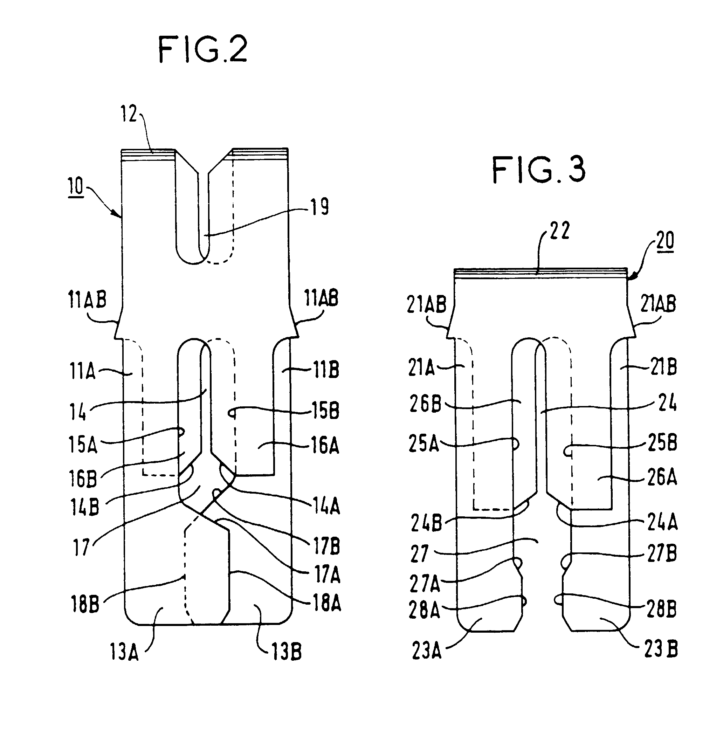

Les contacts 10 et 20 sont décrits en référant plus particulièrement aux figures 2 et 3. Ils sont en grande partie similaires et sont donc décrits simultanément.

Ces contacts sont chacun formé par deux lames 11A et 11B ou 21A et 21B, qui sont accolées l'une contre l'autre et solidaires sur un premier des petits bords 12 ou 22 du contact concerné. Chacun comporte deux bras élastiques terminaux 13A et 13B ou 23A et 23B opposés à son premier bord et une fourche autodénudante principale 14 ou 24, ouverte en regard des bras élastiques du contact.

Cette fourche est sensiblement axiale sur le contact. Elle est définie à partir de deux fentes profondes en U 15A et 15B, ou 25A et 25 B, réalisées chacune dans l'une des lames et se superposant partiellement. Chaque fente prolonge sur l'un de ses côtés le bras élastique correspondant et définit sur l'autre de ses côtés une branche tronquée 16A ou 16B ou 26A ou 26B selon la lame et le contact. Elle forme une transition d'échancrure 17A ou 17B ou 27A ou 27B à son départ sur le bras qu'elle prolonge. Ces deux fentes se superposent sur l'axe longitudinal du contact et définissent ainsi la fourche autodénudante de faible largeur, entre les bords internes des branches tronquées 16A et 16B ou 26A et 26B.

Chaque contact présente en outre, sensiblement au même niveau que le fond de la fourche autodénudante, deux dents, saillantes sur les bords externes des bras élastiques et des branches tronquées et notées identiquement 11AB ou 21AB.

Sur le contact, une ouverture d'accès 17 ou 27 à la fourche autodénudante principale est définie par l'ouverture de chacune de ses fentes en U. Elle est délimitée d'une part entre des chanfreins terminaux 14A et 14B ou 24A et 24B sur les bords internes des deux branches tronquées, qui forment un Vé d'entrée sur la fourche autodénudante, et d'autre part par les deux transitions d'échancrure 17A et 17B ou 27A et 27B. Cette ouverture d'accès permet l'insertion aisée d'un conducteur isolé à l'avant de la fourche, pour son raccordement en le poussant jusqu'au fond de cette fourche.

Les deux bras élastiques terminaux 13A et 13B du contact 10 sont prévus de largeur légèrement supérieure à la moitié de la largeur du contact. Ils sont chevauchants l'un sur l'autre dans la partie terminale axiale du contact. Les bords internes 18A et 18B de ces bras sont rectilignes et se terminent par un chanfrein, non référencé, sur chacun d'eux.

Les deux bras élastiques terminaux 23A et 23B du contact 20 sont par contre de largeur sensiblement moindre que la moitié de la largeur du contact. Ils ont leurs bords internes 28A et 28B en retrait par rapport à l'axe du contact et laissent un intervalle entre eux le long duquel l'ouverture d'accès 27 est ouverte et débouche sur le bord opposé au bord 22.

Cet intervalle est de largeur sensiblement égale ou légèrement inférieure à celle des parties se chevauchant des bras élastiques du contact 10.

Le seul contact 10 comporte en outre une autre fourche autodénudante, dite de dérivation 19, qui est ouverte sur le bord 12 de ce contact. Cette fourche de dérivation est alignée avec la fourche principale 14. Elle est affectée au raccordement d'un autre conducteur en dérivation sur celui raccordé à la fourche principale 14.

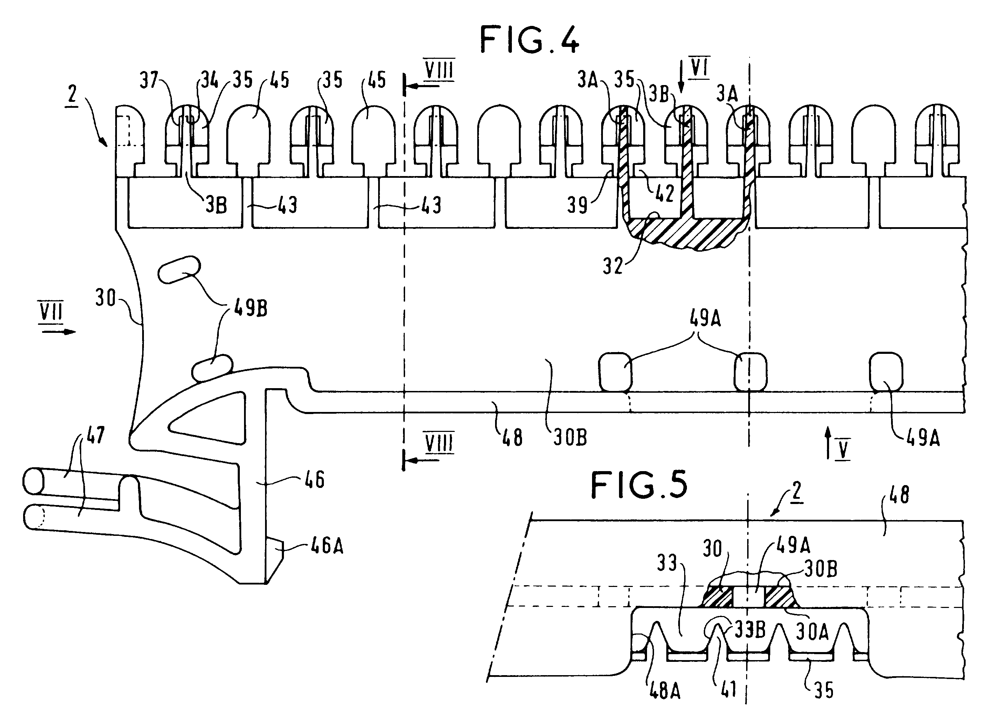

Le bloc de raccordement 2 est décrit plus en détail en se référant à la figure 1 et aux figures 4 à 8, ces dernières figures montrant le corps isolant du bloc non équipé mais permettant de préciser les dispositions prévues à cet effet.

Il présente une partie longitudinale intermédiaire 30, qui est plate et assure la rétention des contacts 20 dans l'un de ses bords longitudinaux dit bord avant 31. Les cloisons 3A et 3B sont solidaires de ce bord avant et saillantes sur lui, à l'avant et latéralement. Elles définissent sensiblement, transversalement à la partie 30 ou corps du bloc de raccordement, le pas d'assemblage des réglettes superposées.

Le bord avant est rainuré entre les cloisons 3A et 3B pour définir une série d'alvéoles indépendants 32 de rétention des contacts 20 dans chacun d'eux. Ces contacts sont retenus dans leur alvéole par leurs deux dents d'accrochage s'ancrant dans les extrémités de ces alvéoles. Ils ont leurs bras élastiques terminaux et leur fourche autodénudante saillants sur le bord avant et sont protégés par les cloisons qui les séparent. La largeur de chaque contact 20 et la distance entre les cloisons successives se correspondent sensiblement.

Les cloisons 3A et 3B sont toutes saillantes identiquement sur l'avant et d'un premier côté de ce bord avant 31 sur l'une des faces correspondante dite face supérieure 30A de la partie 30. Il leur correspond une série de nervures 33, saillantes le long du bord avant sur ce premier côté, sur lesquelles les cloisons individuelles reposent et sont centrées. Les cloisons 3A et 3B présentent une fenêtre quasi terminale 34, dans chacune d'elles sur ce premier côté, qui est délimitée par une patte terminale 35 transversale à la cloison. Chaque patte 35 forme en outre un épaulement 36 sur la fenêtre et en regard de l'une des nervures. Ces pattes 35 et leur épaulement individuel 36 définissent deux surfaces d'appui pour la tige de masse 4 mise en place dans la série de fenêtres 34. Chaque patte est en outre ajourée, en regard de la fenêtre qu'elle délimite, par une lumière 37.

La série discontinue de pattes 35 est couplée à la face 30A de la partie 30 par une série de doigts d'attache 39, entre les pattes et le bout des nervures correspondantes 33, pour définir ensemble la face supérieure résultante du bloc 2. Les doigts d'attache 39 sont centrés individuellement sur les pattes 35 et leur épaulement 36. Chacun est de largeur moindre que l'épaisseur des pattes et des nervures et forme une légère surépaisseur sur le bord de chacune des cloisons 3A et 3B.

Les bords latéraux 33A des nervures 33 forment des transitions en biais entre les pattes 35 ou leurs doigts d'attache et la face 30A de la partie 30. Les nervures 33 définissent sur cette face 30A des échancrures 41 entre leurs bords 33B en vis-à-vis. Chacune de ces échancrures débouche entre deux cloisons 3A et 3B, au niveau du bord avant 31 de la partie 30 et au regard du contact retenu dans ce bord. Ces échancrures 41 assurent la séparation et le guidage des conducteurs de l'ensemble de lignes desservant le bloc, qui sont raccordés individuellement aux contacts 20. Il leur correspond des ouvertures plus larges 42, entre les doigts d'attache 39.

Les cloisons 3A sont par contre les seules saillantes le long du bord avant 31, sur l'autre face 30B de la partie 30. Elles se terminent par des pattes transversales 45, alignées et parallèles aux pattes opposées 35, qui définissent de fines nervures correspondantes 43 de transition en biais entre elles et la face 30B. Ces pattes 45 et les nervures 43 distinguent les unes des autres les paires de contacts 20 retenus sur le bord avant 31, de part et d'autre de chacune des cloisons 3B, tronquées de ce côté inférieur relativement aux cloisons 3A et se terminant directement au niveau de la face 30B.

Le bloc 2 présente en outre, à l'opposé de la série de compartiments avant 3, deux pattes arrière 46 à dent quasi terminale 46A en vis-à-vis, d'accrochage sur un rail linéaire ou en U, non représenté, et deux anneaux arrière 47 de guidage de jarretières et d'un câble de ligne. Ces pattes 46 et ces anneaux 47 sont terminaux sur le bord arrière de la partie 30. Ils sont avantageusement saillants de part et d'autre de la partie 30, sensiblement de la même manière que les compartiments, en définissent le pas d'assemblage de blocs 2 superposés. Ils sont reliés par un voile entretoise longitudinal 48. Ce voile est saillant de part et d'autre de la partie 30 et peut être discontinu. Il présente en particulier une ouverture centrale 48A dans sa partie supérieure, qui permet le passage d'un câble venant de l'arrière du bloc. Il lui correspond des trous arrière, 49A à travers la partie 30 pour le maintien d'un câble ou de ses lignes à l'aide d'un ou de colliers non représentés.

Les faces 30A et 30B définissent entre d'une part les pattes avant 35 et 45 et d'autre part le voile arrière 48, un chemin pour les lignes du câble C et un chemin pour les jarretières 7.

D'autres trous terminaux 49B à travers la partie 30 permettent le maintien du câble, lorsque celui-ci arrive non pas de l'arrière du bloc 2, mais par l'un de ses côtés latéraux.

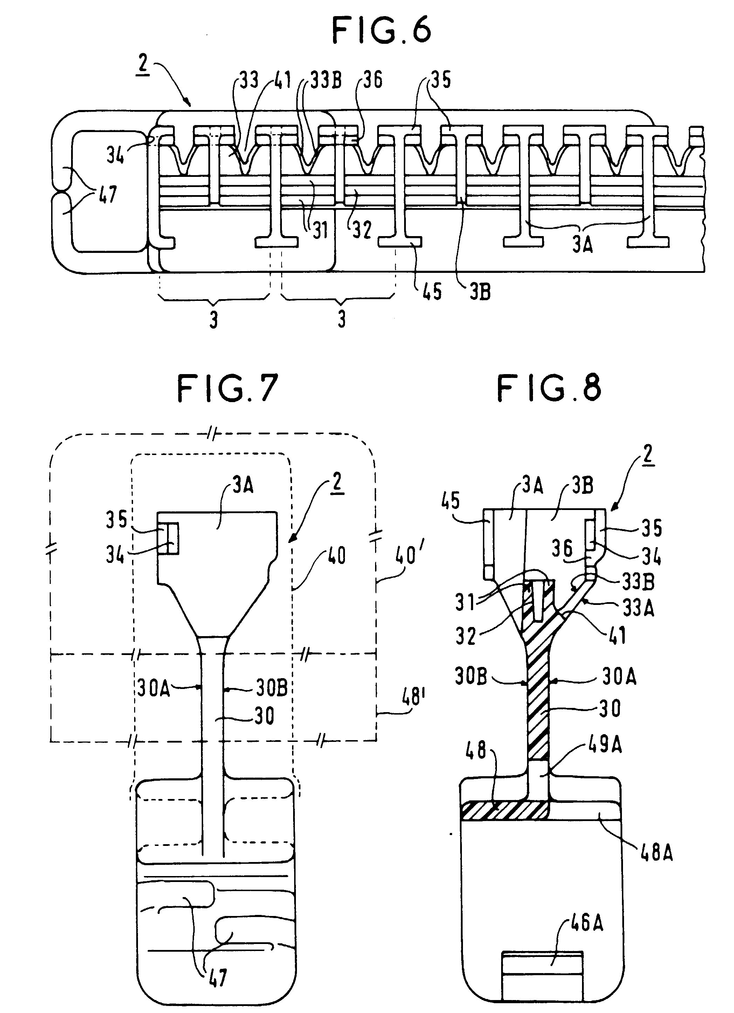

En variante, ainsi qu'illustré en pointillés dans la figure 7, la partie 30 est solidaire d'un boîtier arrière 48', de fixation murale du bloc de raccordement 2.

Un capot avant 40 ou 40' protège la réglette et se fixe sur le voile 48 ou le boîtier 48', ainsi que montré dans cette figure 7.

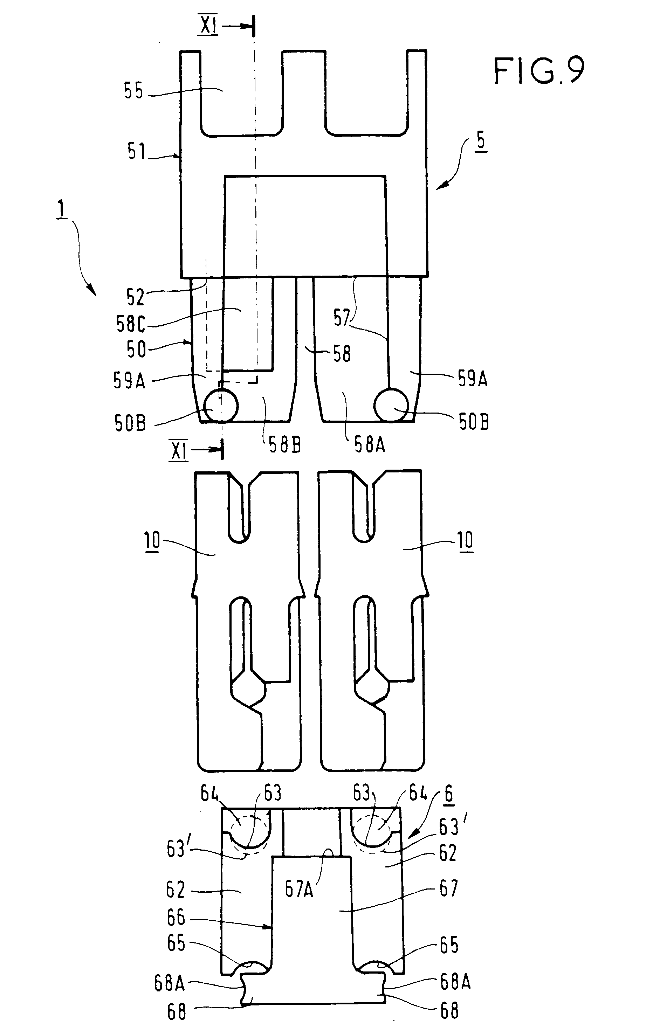

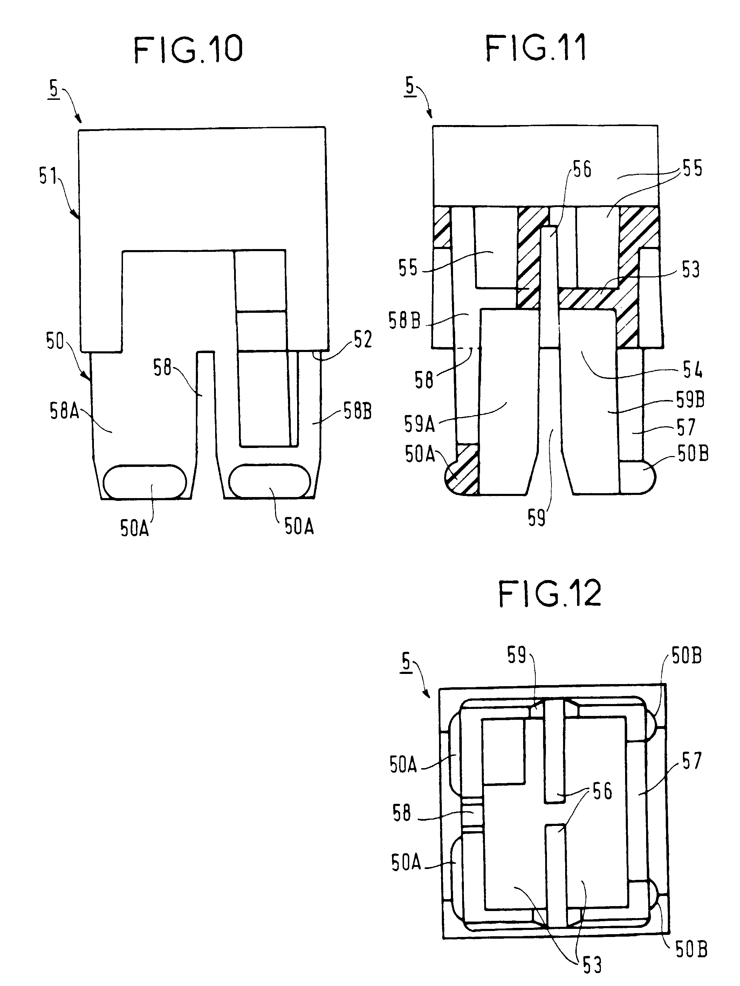

Le connecteur 1 de jarretière est décrit en se référant à la figure 1 mais plus particulièrement aux figures 9 à 17. Il est de forme parallélépipédique .

Le fourreau 5 est divisé en une partie arrière 50 qui s'enfiche dans l'un des compartiments doubles 3 du bloc 2 et une partie avant 51, qui est épaulée extérieurement sur la partie 50 et reste extérieure au compartiment double concerné. L'épaulement extérieur entre elles, noté 52, définit la butée d'enfichage du connecteur de jarretière dans l'un des compartiments doubles.

La partie avant 51 est divisée intérieurement par une cloison transversale 53, pour définir un évidement intermédiaire 54, qui correspond et prolonge directement celui de la partie arrière 50, et un évidement frontal 55. Cette cloison 53 assure le maintien des deux contacts 10 dans le connecteur 1. Elle présente à cet effet deux fenêtres étroites 56, qui sont alignées mais sont séparées et indépendantes l'une de l'autre.

Les deux contacts, retenus par leurs dents latérales dans ces fenêtres, sont saillants côte à côte de part et d'autre de cette cloison 53. Leurs bras élastiques terminaux s'étendent dans l'évidement arrière. Leur fourche autodénudante principale 14 est située dans l'évidement intermédiaire 54 et leur fourche autodénudante de dérivation 19 dans l'évidement frontal 55, ce dernier étant de préférence compartimenté pour séparer les deux contacts.

Les parois de la partie arrière 50 sont élastiquement déformables, tant pour l'enfichage de la partie arrière 50 dans l'un des compartiments doubles du bloc que pour l'actionnement du plot poussoir 6 dans cette partie arrière.

Elles sont précisées en considérant la section de la partie arrière, illustrée carrée, et en considérant le connecteur dans ses conditions d'enfichage sur le bloc de raccordement, lui-même dans ses conditions d'utilisation.

Cette partie arrière présente une paroi inférieure totalement ouverte par une fenêtre 57, une paroi supérieure divisée par une fente centrale 58 en deux branches 58A et 58B, et deux parois latérales chacune également divisée par une fente centrale 59 en deux branches 59A et 59B.

La fente 58 est en vis-à-vis de l'intervalle libre que laissent entre eux les deux contacts en place dans le fourreau 5. Elle correspond à la cloison 3B divisant le compartiment double dans lequel est enfiché le connecteur.

La partie arrière 50 présente en outre deux nervures semi-circulaires 50A, terminales sur les deux branches 58A et 58B de sa paroi supérieure, qui sont saillantes sur l'extérieur de ces branches. Elle présente également deux bossages circulaires 50B, terminaux sur le bord inférieur des deux branches latérales 59A limitant la fenêtre 57, qui sont saillants pour moitié sensiblement dans la fenêtre et extérieurement.

En outre, ce fourreau présente une fenêtre 58C réalisée dans la branche 58B de sa paroi supérieure. Cette fenêtre 58C reçoit une patte de masse du module de protection, quand ce dernier est monté sur le connecteur 1.

Les nervures 50A assurent la retenue du connecteur dans l'un des compartiments doubles du bloc, par encliquetage à l'arrière de l'épaulement 36 des pattes 35 de la face supérieure du bloc. Les bossages circulaires 50B coopèrent quant à eux avec le plot poussoir d'une part, ainsi qu'il sera précisé ci-après, et viennent également s'encliqueter à l'arrière des pattes 45 de la face inférieure du bloc 2.

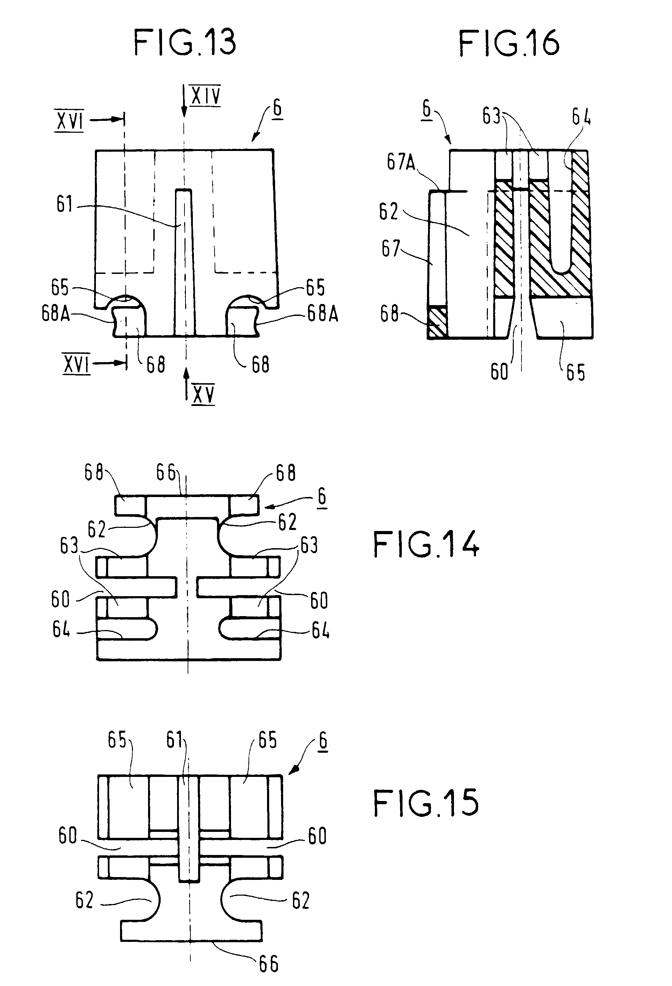

Le plot poussoir 6 est précisé en se référant de manière générale à la figure 1, mais plus particulièrement aux figures 13 à 17. Il est décrit en considérant sa forme globale parallélépipédique, qui correspond à l'évidemment de la partie arrière 50 et l'évidement intermédiaire 54 du fourreau 5, dans lesquels il coulisse et s'insère totalement. Ses quatre faces périphériques sont dites supérieure, inférieure et latérales, en correspondance avec les parois de la partie arrière du fourreau, et ses deux faces terminales sont dites avant ou intérieure pour celle intérieure au fourreau et arrière pour l'autre. Ces différentes faces sont identifiées à partir des dispositions, qui sont précisées ci-après, sur chacune d'elles.

Ce plot comporte deux fentes identiques 60, parallèles à ses faces supérieure et inférieure, qui sont sensiblement centrées chacune sur l'une des deux faces latérales et sont ouvertes sur la face intérieure et arrière. Ces fentes reçoivent les deux contacts 10 retenus dans le fourreau et permettent au plot poussoir de coulisser sur ceux-ci. Il comporte une troisième fente 61, centrale dans sa face supérieure et ouverte uniquement sur sa face intérieure, qui correspond à la fente 58 dans la paroi supérieure du fourreau et reçoit la cloison médiane 3B du compartiment double dans lequel est enfiché le connecteur.

Il comporte des dispositions spécifiques à sa fonction propre de raccordement des deux fils 7 de jarretiérage, sur les deux contacts du connecteur, et de maintien de ces deux fils raccordés aux contacts.

Ce sont deux rainures latérales 62 qui sont réalisées chacune dans la moitié dite inférieure des parois latérales et sont ouvertes sur les faces intérieure et arrière. Ces deux rainures sont presque totalement ouvertes en long dans la face inférieure, ainsi qu'il sera précisé plus en détail ci-après.

Ce sont également deux échancrures semi-circulaires 63, réalisées dans la face intérieure, qui sont ouvertes chacune dans l'une des deux rainures 62 et la face inférieure mais sont fermées chacune à l'opposé par une butée 64 sur la face supérieure.

Ce sont en outre deux autres échancrures semi-circulaires 65, réalisées dans la face arrière, qui sont ouvertes chacune dans l'une des deux rainures 62 et la face supérieure mais sont partiellement fermées à l'opposé sur la face inférieure.

Le fond des rainures 62 est semi-circulaire. La face inférieure du plot poussoir est échancrée le long des deux rainures 62, en les ouvrant sur cette face, sauf au niveau de leur partie terminale sur la face inférieure. Elle définit un relief 66, ayant une forme de T, entre les deux rainures 62. Le jambage central de ce relief est noté 67 et ses branches 68.

Le jambage central 67 est très peu saillant sur le fond des deux rainures 62, ainsi laissées en grande partie ouvertes sur la face inférieure du plot. Il a son extrémité légèrement tronquée, pour être laissée en retrait relativement à la face intérieure, qui définit une butée 67A contre la paroi inférieure de la partie avant 51 du fourreau 5, quand la face intérieure du plot poussoir est elle-même en butée contre la cloison 53 divisant cette partie avant, en fin d'insertion à fond du plot poussoir dans le fourreau.

Le bord continu des deux branches 68 du relief en T 66 définit l'arête entre la face inférieure et la face arrière du plot poussoir. Les extrémités 68A des branches sont tronquées et ainsi rendues en léger retrait sur les deux faces latérales du plot poussoir mais très saillantes sur le fond des rainures. Elles sont arrondies en creux. Elle coopèrent avec les deux bossages circulaires 50B du fourreau, pour fermer à leur niveau les échancrures, sur la face inférieure du connecteur, lorsque le plot poussoir est inséré à fond dans le fourreau.

Le raccordement des deux fils de jarretière 7 aux contacts 10 en place dans le fourreau 5 se fait comme suit. Le plot poussoir est initialement mis en position ouverte, en le désengageant partiellement de la partie arrière 50 du fourreau. Ses deux échancrures 63 sont ainsi dégagées de l'évidement intermédiaire 54 du fourreau, pour être rendues accessibles à travers la fenêtre 57 de la partie arrière, et se trouver en regard de l'ouverture d'accès 17 de la fourche autodénudante 14 des deux contacts 10. Les portions terminales des deux fils 7 sont alors enfilées dans les échancrures 63 et les deux ouvertures d'accès 17, jusqu'à arrêt de leur bout contre les deux butées 64, dites de fin d'entrée de fil dans le connecteur. Les deux fils sont alors rabattus contre le connecteur pour être alors positionnées dans les deux rainures 62. Ils sont insérés chacun entre l'un des bossages circulaires 50B du fourreau et l'extrémité de la branche correspondante 68 du relief en T 66, qui sont décalés l'un de l'autre dans cette position ouverte du plot poussoir.

La simple insertion à fond du plot poussoir dans le fourreau permet le raccordement des fils de jarretière dans la fourche autodénudante 14 des deux contacts 10. Elle permet en outre le maintien prisonnier des deux fils dans les rainures 62, par les extrémités 68A des branches 68 du relief en T 66 qui sont chacune en contact avec le bossage correspondant 50B.

Dans une variante de réalisation, ainsi qu'illustré en pointillés dans la figure 9, sur le plot poussoir, les échancrures d'entrée précitées 63 sont remplacées par deux trous d'entrée 63' réalisés en pleine masse dans le plot poussoir, à proximité de sa face intérieure et de part et d'autre des deux fentes 60 les ouvrant sur la face intérieure. Ces trous retiennent les deux fils pour leur déconnexion des contacts 10, quand le plot poussoir est mis en position ouverte.

Le raccordement des deux conducteurs 70 d'une jarretière de dérivation peut être réalisé à souhait sur la fourche autodénudante de dérivation 19, qui est accessible dans l'évidement frontal avant 55. Ce raccordement est effectué à l'aide d'un outil traditionnel. Les deux fils 70 sortent par la face inférieure, à l'avant de la cloison 53.

L'évidement frontal avant 55 du fourreau est illustré ouvert sur sa face avant. Il est également ouvert sur les parois inférieure et supérieure du fourreau. Il peut être fermé plus complètement en présentant de simples accès à travers son éventuelle paroi frontale, pour le raccordement du module de protection 8, et des fentes dans ses parois frontale, supérieure et inférieure pour le raccordement des fils 70 d'une jarretière de dérivation.

Le module de protection vient coiffer les parois de l'évidement frontal avant 55 en le fermant. Il laisse deux passages pour les fils de la jarretière de dérivation, lorsqu'une protection de la ligne est souhaitée alors que les fils de dérivation sont raccordés aux contacts du connecteur.

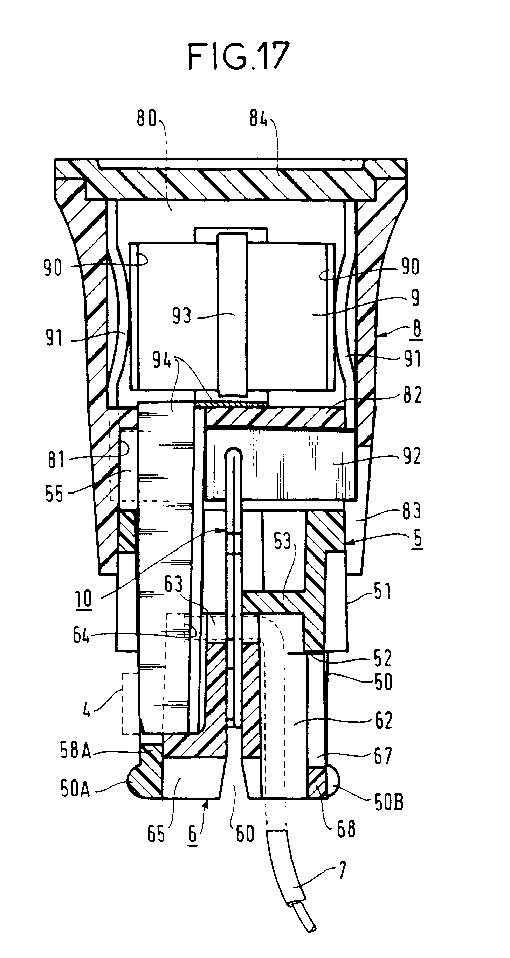

Le module de protection 8 est décrit en se référant à la figure 1 et plus particulièrement à la figure 17.

Ce module ou plus précisément son boîtier présente un logement interne 80, dans lequel est monté le parafoudre considéré tripolaire 9, et une cheminée arrière 81, dont la section interne correspond à la section externe de la partie avant 51 du fourreau. La cheminée et le logement sont séparées par une cloison interne 82. Le bord de la paroi inférieure de la cheminée présente deux échancrures 83, pour le passage des deux fils 70. Le logement 80 est fermé par un couvercle 84.

Le parafoudre comporte deux électrodes de ligne 90, qui sont reliées à deux lames ressort 91, et une électrode de masse 93 qui est reliée à une patte de masse 94.

Les deux lames ressort sont opposées dans le logement 80 et sont saillantes dans la cheminée, dans laquelle elles définissent deux pattes de ligne 92. Celles-ci sont parallèles et écartées convenablement l'une de l'autre pour se raccorder aux deux contacts 10, retenus côte à côte dans le fourreau 5 et saillants dans son évidement frontal avant. Chacune se raccorde dans la fourche autodénudante de dérivation 19 du contact correspondant 10 ou en variante vient s'appliquer en pression contre l'un des bords latéraux ou l'une des faces du contact.

La patte de masse 94 est une lame coudée qui traverse la cloison 82 et de là s'étend dans la cheminée, à proximité et transversalement à la paroi supérieure de la cheminée 81 du module considéré en place sur le connecteur 1. Elle est longue et largement saillante sur le bout de la cheminée, en étant reçue dans la fenêtre 58C de la paroi supérieure du fourreau 5. Elle se raccorde ainsi directement en pression sur la tige de masse 4, quand le connecteur 1 porte le module 8 et est enfiché sur le bloc de raccordement 2. Ce raccordement se fait par le bord de la patte de masse venant contre la face intérieure de la tige de masse, entre deux pattes 35.

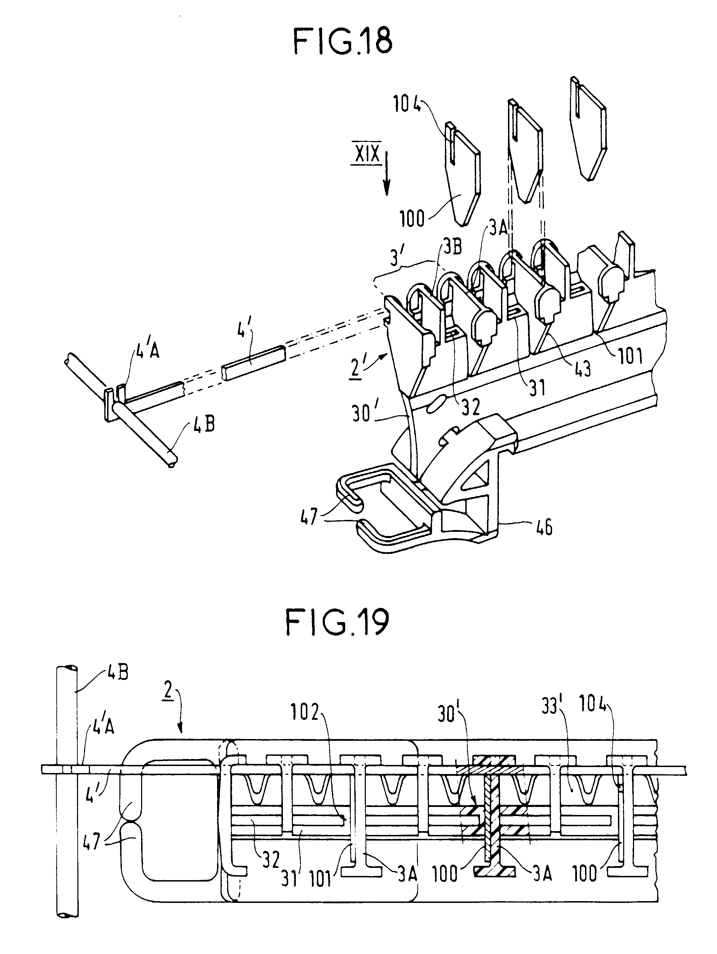

Les figures 18 et 19 montrent une adaptation du bloc de raccordement illustré dans la figure 1. Ce bloc adapté est référencé 2'. Les différences par rapport au bloc précédent sont seules précisées.

Le bloc 2' est sensiblement plus long que le bloc 2, pour recevoir une série de cloisons métalliques 100 de blindage de chaque compartiment double. Chacune des cloisons de blindage 100 est rapportée contre les seules cloisons 3A, d'un seul côté de ces dernières, exception faite de l'une des deux cloisons terminales 3A.

En correspondance, la partie médiane dite adaptée et notée 30' et les nervures élargies, dites également adaptées et notées 33' présentent des rainures 101 réalisées transversalement au bloc 2' d'un seul côté des cloisons 3A, entre chacune des cloisons 3A et chacune des rainures 32 de retenue des contacts. Ces cloisons de blindage sont directement reçues dans les rainures transversales. Elles épousent la forme des cloisons 3A, à l'avant et latéralement, ainsi que du profil en biais défini par les faces latérales des nervures 33' et les bords des nervures 43.

Les rainures 32 de retenue des contacts qui se terminent en regard des rainures 101, ne débouchent pas dans ces dernières, ainsi qu'illustré en 102.

Ces cloisons de blindage ont elles-mêmes une fente 104 dans leur bord avant dans laquelle est reçue la tige de masse 4' également plus longue dans cette réalisation.

Les connecteurs précités s'enfichent pareillement dans les compartiments doubles blindés notés 3'.

Dans une autre variante de réalisation, relative au connecteur 1 et non représentée, les deux contacts de chacun d'eux peuvent être sans leur fourche autodénudante de dérivation. Dans ces conditions, le connecteur modifié est sans évidement frontal et a sa paroi avant définie par la cloison divisant précédemment la partie avant de ce connecteur. Cette cloison est percée convenablement pour recevoir les pattes de ligne du parafoudre du module de protection en assurant le raccordement des pattes de ligne aux deux contacts.

Dans une autre variante de réalisation, relative au bloc de raccordement et non représentée, les contacts équipant ce bloc ont leur fourche autodénudante ouverte à l'opposé du bras élastique. Dans ces conditions, les contacts ayant une longueur convenable peuvent avoir leur fourche autodénudante accessible sur le bord arrière opposé au bord avant 31, pour un câblage arrière des lignes sur les contacts, ou peuvent avoir leur fourche autodénudante coudée et accessible sur l'une des faces 30A et 30B de la partie 30, pour un câblage latéral des lignes sur ces contacts et une protection des lignes ainsi câblées entre deux blocs superposés.

## Revendications

1. Réglette de connexion, comportant un bloc de raccordement (2), équipé d'une rangée de premiers contacts (20) affectés à des paires de conducteurs de ligne, et des connecteurs (1) de jarretière, enfichables sur une face dite avant du bloc de raccordement et équipés chacun de deux deuxièmes contacts (10) affectés à deux fils (7) d'une jarretière, dans laquelle lesdits premiers et deuxièmes contacts sont plats et pourvus chacun d'une fourche autodénudante principale, de raccordement de l'un des conducteurs de ligne à chaque premier contact et de raccordement de l'un des fils de jarretière à chaque deuxième contact, et ont une partie terminale de couplage accessible sur la face avant du bloc, pour les premiers contacts, et sur une face arrière de chaque connecteur, pour lesdits deuxièmes contacts, caractérisée en ce que ledit bloc de raccordement (2) comporte d'une part un corps rectangulaire et plat (30), d'épaisseur réduite et inférieure à un pas d'assemblage de réglettes superposées, ayant deux faces planes (30A, 30B) définissant des chemins de câblage et un bord longitudinal rainuré dit bord avant (31) dans lequel lesdits premiers contacts (20) sont retenus côte à côte et ont leur partie terminale de couplage (23A, 23B) saillante à l'avant dudit bord avant, et d'autre part une série de premières cloisons (3A), transversales et solidaires dudit bord avant (31) et saillantes à l'avant et latéralement sur celui-ci, définissant une série de compartiments d'enfichage desdits connecteurs entre elles et ledit bord avant et définissant également, transversalement audit bord avant, ledit pas d'assemblage, sensiblement.

2. Réglette selon la revendication 1, caractérisée en ce que lesdits premiers contacts (20) ont leur fourche autodénudante (24) ouverte en regard de la partie terminale de couplage de chacun d'eux et également saillante sur l'avant dudit bord avant (31), pour un câblage dit avant desdits conducteurs de ligne sur lesdits premiers contacts.

3. Réglette selon l'une des revendications 1 et 2, caractérisée en ce que ledit bloc de raccordement (2) comporte en outre des deuxièmes cloisons (3B) alternées avec les premières cloisons (3A) et séparant les deux premiers contacts de chaque paire.

4. Réglette selon la revendication 3, caractérisée en ce que lesdites deuxièmes cloisons (3B) sont saillantes à l'avant et d'un seul côté dudit bord avant (31), identiquement aux premières cloisons (3B), en permettant de différencier les unes des autres les paires de premiers contacts, sur l'autre côté dudit bord avant.

5. Réglette selon l'une des revendications 1 à 4, caractérisée en ce que ledit bloc de raccordement (2) porte une tige de masse (4) montée latéralement le long dudit bord avant dans une série de fenêtres (34) prévues sur les cloisons (3A, 3B).

6. Réglette selon l'une des revendications 1 à 5, caractérisée en ce que les cloisons (3A, 3B) comportent, sur chacun de leur bord saillant latéralement sur ledit bord avant (31), une patte terminale (35, 45), transversale à la cloison et parallèle et couplée à la face correspondante (30A, 30B) dudit corps (30).

7. Réglette selon la revendication 6, caractérisée en ce que les pattes terminales (35), situées d'un premier côté dudit bord avant (31) sont couplées à la face correspondante (30A) dudit corps par une série de nervures latérales (33), s'étendant le long dudit premier côté du bord avant, ayant une face avant sur laquelle est centrée l'une des cloisons et une face latérale (33A) de transition en biais entre les pattes terminales et la face correspondante (30A) du corps, et définissant entre elles une série d'échancrures de guidage (41), affectées au guidage des conducteurs de ligne dans lesdits compartiments (3).

8. Réglette selon la revendication 7, caractérisée en ce que les pattes terminales (35) et lesdites nervures (33) sont couplées par une série de doigts d'attache (39), chacun centré sur l'une des pattes terminales (35) et la prolongeant jusqu'à la nervure correspondante (33).

9. Réglette selon l'une des revendications 1 à 8, caractérisée en ce que ledit bloc de raccordement (2) comporte en outre des moyens de fixation (46, 45') opposés aux compartiments (3), dits arrière sur le bloc et saillants de part et d'autre dudit bloc.

10. Réglette selon la revendication 9 caractérisée en ce que lesdits moyens de fixation sont constitués par deux pattes élastiques d'accrochage (46), sensiblement terminales sur ledit bloc et pourvues chacune d'une patte d'actionnement (47) formant anneau de guidage sur les extrémités arrière dudit bloc.

11. Réglette selon l'une des revendications 1 à 10, caractérisée en ce que lesdits deuxièmes contacts (10) ont leur fourche autodénudante dite principale (14) ouverte en regard de la partie terminale de couplage de chacun d'eux.

12. Réglette selon la revendication 11, caractérisée en ce que lesdits deuxièmes contacts (10) comportent une autre fourche autodénudante dite de dérivation (19), ouverte à l'opposé de la partie terminale de couplage de chacun d'eux.

13. Réglette selon l'une des revendications 11 et 12, caractérisée en ce que les connecteurs (1) comportent chacun d'une part un fourreau (5), ayant une partie dite arrière (50) d'enfichage dans l'un des compartiments, et une partie opposée dite avant, dans lesquelles les deux deuxièmes contacts (10) du connecteur sont retenus côte à côte dans la partie avant (51) et ont leur partie terminale de couplage saillante dans la partie arrière (50), et d'autre part un plot poussoir (6), fendu et monté coulissant dans ladite partie arrière et au moins partiellement dans ladite partie avant dudit fourreau, le long de la fourche autodénudante principale (14) des deuxièmes contacts, et pourvu de deux entrées (63, 63'), réalisées parallèlement et sensiblement dans une face dite intérieure dudit plot poussoir et affectées aux deux fils de jarretière (7) pour leur raccordement aux fourches autodénudantes (14) des deux deuxièmes contacts, ladite partie avant (50) dudit fourreau ayant une paroi dite inférieure ouverte (57) à travers laquelle lesdits fils (7) sont insérés dans lesdites entrées dudit plot poussoir, pour une position d'ouverture du plot relativement audit fourreau.

14. Réglette selon la revendication 13, caractérisée en ce que ledit plot poussoir (6) comporte deux butées terminales (64), chacune sur celui des bouts desdites entrées (63, 63') situé sur une face dite supérieure du plot poussoir, à l'opposé de la face inférieure ouverte (57) dudit fourreau (5).

15. Réglette selon l'une des revendications 13 et 14, caractérisée en ce que ledit plot poussoir (6) comporte deux rainures latérales (62), réalisées chacune dans une face dite latérale du plot et ouvertes toutes deux le long de la face opposée à la face supérieure du plot poussoir et dite inférieure, débouchant dans les deux entrées (63, 63') et sur la face opposée à sa face intérieure et dite arrière.

16. Réglette selon la revendication 15, caractérisée en ce que chaque connecteur (1) comporte en outre, d'une part deux bossages (50B), terminaux et saillants dans la face inférieure ouverte de la partie arrière (51) du fourreau (5), et d'autre part deux branches (68), terminales sur la face inférieure dudit plot poussoir (6) mais sensiblement en retrait sur ses deux faces latérales, la face inférieure dudit plot définissant un relief en T (67), auquel appartiennent lesdites branches, entre lesdites rainures latérales (62).

17. Réglette selon l'une des revendications 12 à 16, caractérisée en ce que la partie avant (51) du fourreau (5) est divisée en une partie intermédiaire évidée (54) et une partie frontale évidée (55), par une cloison intermédiaire (53) dans laquelle sont retenus les deux deuxièmes contacts (10), lesdits deuxièmes contacts étant pourvus de deux dents de retenue (11AB) opposées l'une à l'autre et situées sensiblement au niveau du fond de la fourche autodénudante principale de chacun d'eux.

18. Réglette selon l'une des revendications 1 à 17, caractérisée en ce qu'elle comporte en outre des modules de protection (8), chacun enfichable sur l'un desdits connecteurs et équipé d'une patte de masse (94) saillante en bout d'une face d'enfichage du module sur le connecteur.

19. Réglette selon l'une des revendications 1 à 18, caractérisée en ce qu'elle comporte en outre des parois de blindage (100) retenues dans ledit premier bord (31), contre chacune desdites premières cloisons (3A).

## Claims

1. A connection strip including firstly a connection block (2) equipped with a row of first contacts (20) assigned to pairs of line conductors, and secondly jumper connectors (1) that can be plugged into a "front" face of the connection block, each jumper connector being equipped with two second contacts (10) assigned to two wires (7) of a jumper, in which connection strip said first and second contacts are flat, and each contact is provided with a main insulation-displacement fork for connecting a respective one of the line conductors to each first contact and for connecting a respective one of the jumper wires to each second contact, each first contact has a coupling end portion accessible from the front face of the block, and each second contact has a coupling end portion accessible from a rear face of each connector, said connection strip being characterized in that said connection block (2) comprises firstly a thin flat rectangular body (30) whose thickness is less than an assembly pitch at which superposed connection strips are assembled together, and which has two plane faces (30A. 30B) defining wiring paths and a grooved "front" longitudinal edge (31) in which said first contacts (20) are retained side-by-side, and have their coupling end portions (23A, 23B) projecting forwards from said front edge, and secondly a series of first partitions (3A) that are transverse and secured to said front edge (31) and that project forwards and sideways therefrom, said series of first partitions cooperating with one another and with said front edge to define a series of pluggable compartments into which said connectors can be plugged, and also substantially defining said assembly pitch transversely to said front edge.

2. A connection strip according to claim 1, characterized in that each of said first contacts (20) has its insulation-displacement fork (24) open facing its coupling end portion and also projecting forwards from said front edge (31). so as to enable said line conductors to be "front" wired to said first contacts.

3. A connection strip according to claim 1 or 2, characterized in that said connection block (2) further includes second partitions (3B) disposed alternately with the first partitions (3A) and separating the first contacts in each pair.

4. A connection strip according to claim 3, characterized in that said second partitions (3B) project forwards and to only one side of said front edge (31), but otherwise identically to said first partitions (3A), thereby enabling the pairs of first contacts to be differentiated from one another on the other side of the front edge.

5. A connection strip according to any one of claims 1 to 4, characterized in that said connection block (2) carries a grounding rod (4) mounted along one side of said front edge in a series of windows (34) provided in the partitions (3A, 3B).

6. A connection strip according to any one of claims 1 to 5, characterized in that each of the partitions (3A, 3B) is provided with an end tab (35, 45) on its edge that projects sideways from said front edge (31) or on each of its edges that project sideways therefrom, said end tab being transverse to the partition, and parallel and coupled to the corresponding face (30A, 30B) of said body (30).

7. A connection strip according to claim 6, characterized in that the end tabs (35) situated on a first side of said front edge (31) are coupled to the corresponding face (30A) of said body via a series of side ribs (33) disposed along said first side of the front edge, each rib having a front face on which one of the partitions is centered, and a side face (33A) forming a sloping transition between the end tab and the corresponding face (30A) of the body, the ribs defining a series of guide recesses (41) between them, which guide recesses are assigned to guiding line conductors into said compartments (3).

8. A connection strip according to claim 7, characterized in that the end tabs (35) and said ribs (33) are coupled together by a series of fastening fingers (39), each of the fingers being centered on one of the end tabs (35) and extending it to the corresponding rib (33).

9. A strip according to any one of claims 1 to 8, characterized in that said connection block (2) further includes fixing means (46, 45') opposite from the compartments (3). said fixing means being at the "rear" of the block and projecting on either side of the block.

10. A connection strip according to claim 9, characterized in that said fixing means are constituted by two resilient clipping catches (46) substantially at respective ends of said block, each catch being provided with an actuating lever (47) forming a guide ring at the corresponding rear end of said block.

11. A connection strip according to any one of claims 1 to 10, characterized in that each of said second contacts (10) has its "main" insulation-displacement fork (14) open facing its coupling end portion.

12. A connection strip according to claim 11, characterized in that each of said second contacts (10) includes a "branch" other insulation-displacement fork (19) open at the opposite end from its coupling end portion.

13. A connection strip according to claim 11 or 12, characterized in that each of the connectors (1) includes firstly a sleeve (5) having a plug-in "rear" portion (50) via which it can be plugged into one of the compartments, and an opposite "front" portion, in which sleeve the two second contacts (10) of the connector are retained side-by-side in the front portion (51) and have their coupling end portions projecting into the rear portion (50), and secondly a split push stud (6) slidably mounted in said rear portion and at least in part in said front portion of said sleeve, along the main insulation-displacement forks (14) of said second contacts, and provided with two inlets (63, 63') disposed parallel to and substantially in an "inner" face of said push stud and assigned to two jumper wires (7) so that they can be connected to the insulation-displacement forks (14) of the two second contacts, said front portion (50) of said sleeve having an open "bottom" wall (57) through which said wires (7) are inserted into said inlets in said push stud, when the stud is in the open position relative to said sleeve.

14. A connection strip according to claim 13, characterized in that said push stud (6) has two end abutments (64), each of which is disposed on that one of the ends of said inlets (63, 63') which is situated on a "top" face of the push stud, opposite from the open bottom face (57) of said sleeve (5).

15. A connection strip according to claim 13 or 14, characterized in that said push stud (6) is provided with two side grooves (62), each of which is disposed in a "side" face of the stud, and both of which are open along the "bottom" face that is opposite from the top face of the push stud, the side grooves opening out into the two inlets (63, 63') and on the "rear" face that is opposite from the "inner" face of the stud.

16. A connection strip according to claim 15, characterized in that each connector (1) further includes firstly two end projections (50B) projecting in the open bottom face of the rear portion (51) of the sleeve (5), and secondly two end prongs (68) on the bottom face of said push stud (6) but substantially set back from the two side faces thereof, the bottom face of said stud defining a T-shaped outline (67), to which said prongs belong, between said side grooves (62).

17. A connection strip according to any one of claims 12 to 16. characterized in that the front portion (51) of the sleeve (5) is subdivided into a cavity-forming intermediate portion (54) and a cavity-forming front portion (55) by an intermediate partition (53) in which the two second contacts (10) are retained, each of said second contacts being provided with two retaining teeth (11AB) opposite from one another and situated substantially level with the end wall of its main insulation-displacement fork.

18. A connection strip according to any one of claims 1 to 17, characterized in that it further includes protection modules (8), each of which can be plugged into a respective one of said connectors, and is equipped with a ground tab (94) projecting at the end of a plug-in face via which the module can be plugged into the connector.

19. A connection strip according to any one of claims 1 to 18, characterized in that it further includes shielding walls (100) retained in said first edge (31). against respective ones of said first partitions (3A).

## Patentansprüche

1. Anschlußleiste, die einen Verbindungsblock (2) aufweist, der mit einer Reihe von ersten Kontakten (20), die Paaren von Leitern einer Leitung zugeordnet sind, und Schaitaderverbindern (1) ausgestattet ist, die auf eine Fläche, vordere Fläche genannt, des Verbindungsblocks aufsteckbar sind und jeweils mit zwei zweiten Kontakten (10) ausgestattet sind, die zwei Drähten (7) einer Schaltader zugeordnet sind, bei der die ersten und zweiten Kontakte flach und jeweils mit einer selbstreinigenden Hauptgabel zur Verbindung eines der Leiter der Leitung mit jedem ersten Kontakt und zur Verbindung eines der Verteilerdrähte mit jedem zweiten Kontakt versehen sind und einen Endteil zur Kopplung aufweisen, der an der vorderen Fläche des Blocks für die ersten Kontakte und an der hinteren Fläche jedes Verbinders für die zweiten Kontakte zugänglich ist, dadurch gekennzeichnet, daß der Verbindungsblock (2) einerseits einen rechteckigen und flachen Körper (30) mit einer Dicke, die verringert und kleiner als ein Montageabstand von übereinandergesetzten Leisten ist, der zwei ebene Flächen (30A, 30B), die Verdrahtungswege definieren und einen gerillten, in Längsrichtung verlaufenden, vorderer Rand (31) genannt, aufweist, in dem die ersten Kontakte (20) nebeneinander gehalten werden und deren Kopplungsendteil (23A, 23B) an der Vorderseite vom vorderen Rand vorstehen, und andererseits eine Relhe von quer verlaufenden und mit dem vorderen Rand (31) fest verbundenen und an der Vorderseite und seitlich an diesem vorstehenden, ersten Trennwänden (3A) aufweist, die eine Reihe von Abteilungen zum Einstecken der Verbinder zwischen sie und den vorderen Rand definieren und auch quer zum vorderen Rand im wesentlichen den Montageabstand definieren.

2. Leiste nach Anspruch 1, dadurch gekennzeichnet, daß die selbstreinigende Gabel (24) der ersten Kontakte (20) gegenüber dem Kopplungsendteil jedes von ihnen offen ist und auch für eine Verdrahtung, vordere Verdrahtung genannt, der Leiter der Leitung an den ersten Kontakten an der Vorderseite des vorderen Randes (31) vorstehen.

3. Leiste nach einem der Ansprüche 1 und 2, dadurch gekennzeichnet, daß der Verbindungsblock (2) außerdem zweite Trennwände (3B) aufweist, die mit den ersten Trennwänden (3A) abwechseln und die beiden ersten Kontakte jedes Paares trennen.

4. Leiste nach Anspruch 3, dadurch gekennzeichnet, daß die zweiten Trennwände (3B) übereinstimmend mit den ersten Trennwänden (3B) an der Vorderseite und von einer einzigen Seite des vorderen Randes (31) vorstehen, wobei sie gestatten, die Paare der ersten Kontakte auf der anderen Seite des vorderen Randes voneinander zu unterscheiden.

5. Leiste nach einem der Ansprüche 1 bis 4, dadurch gekennzeichnet, daß der Verbindungsblock (2) einen Massestab (4) trägt, der seitlich entlang des vorderen Randes in einer Reihe von an den Trennwänden (3A, 3B) vorgesehenen Fenstern (34) angebracht ist.

6. Leiste nach einem der Ansprüche 1 bis 5, dadurch gekennzeichnet, daß die Trennwände (3A, 3B) an jedem ihrer am vorderen Rand (31) seitlich vorstehenden Ränder einen Endansatz (35, 45) aufweist, der quer zur Trennwand und parallel zur entsprechenden Fläche (30A, 30B) des Körpers (30) und mit ihr verbunden ist.

7. Leiste nach Anspruch 6, dadurch gekennzeichnet, daß die Endansätze (35), die sich auf einer ersten Seite des vorderen Randes (31) befinden, durch eine Reihe von seitlichen Rippen (33), die sich entlang der ersten Seite des vorderen Randes erstrecken, der eine vordere Fläche, auf der die eine der Trennwände zentriert ist. und eine seitliche Fläche (33A) des schrägen Übergangs zwischen den Endansätzen und der entsprechenden Fläche (30A) des Körpers aufweist und zwischen ihnen eine Reihe von Führungsaussparungen (41) definiert, die für Führung der Leiter der Leitung in den Abteilungen (3) eingesetzt werden, mit der entsprechende Fläche (30A) des Körpers verbunden sind.

8. Leiste nach Anspruch 7, dadurch gekennzeichnet, daß die Endansätze (35) und die Rippen (33) durch eine Reihe von Verbindungszapfen (39) verbunden sind, die jeweils auf einem der Endansätze (35) zentriert sind und ihn bis zur entsprechenden Rippe (33) verlängern.

9. Leiste nach einem der Ansprüche 1 bis 8, dadurch gekennzeichnet, daß der Verbindungsblock (2) außerdem Befestigungsmittel (46, 45'), hintere Befestigungsmittel genannt, aufweist, die den Abteilungen am Bock entgegengesetzt sind und beiderseits des Blocks vorstehen.

10. Leiste nach Anspruch 9, dadurch gekennzeichnet, daß die Befestigungsmittel aus zwei elastischen Halteklammern (46) bestehen, die sich im wesentlichen am Ende des Blockes befinden und jeweils von einem Betätigungsansatz (47) vorstehen, der den Führungsring an den hinteren Enden des Blocks bildet.

11. Leiste nach einem der Ansprüche 1 bis 10, dadurch gekennzeichnet, daß die selbstreinigende Gabel, Hauptgabel (14) genannt, der zweiten Kontakte (10) gegenüber dem Kopplungsendteil eines jeden von ihnen offen ist.

12. Leiste nach Anspruch 11, dadurch gekennzeichnet, daß die zweiten Kontakte (10) eine weitere selbstreinigende Gabel, Verzweigungsgabel (19) genannt, aufweisen, die entgegengesetzt zum Kopplungsendteil eines jeden von ihnen offen ist.

13. Leiste nach einem der Ansprüche 11 und 12, dadurch gekennzeichnet, daß die Verbinder (1) jeweils einerseits eine Hülse (5), die einen Teil, hinterer Teil (50) genannt, zum Einstecken in eine der Abteilungen und einen entgegengesetzten Teil, vorderer Teil genannt, aufweist, in welchen die beiden Kontakte (10) des Verbinders nebeneinander im vorderen Teil (51) gehalten werden und deren Kopplungsendteil in den hinteren Teil (50) vorsteht, und andererseits eine Druck-Steckstelle (6) aufweisen, die geschlitzt und im hinteren Teil und wenigstens teilweise im vorderen Teil der Hülse entlang der selbstreinigenden Hauptgabel (14) der zweiten Kontakte gleitend angebracht und mit zwei Eingängen (63, 63') versehen ist, die parallel und im wesentlichen in einer Fläche, innere Fläche genannt, der Druck-Steclcatelle ausgeführt und den beiden Verteilerdrähten (7) für ihre Verbindung mit den selbstreinigenden Gabeln (14) der beiden zweiten Kontakte zugeordnet sind, wobei der vordere Teil (50) der Hülse eine Wand, offene untere Wand (57) genannt, aufweist, durch die die Drähte (7) in die Eingänge der Druck-Steckstelle für eine Position der Öffnung der Steckstelle relativ zur Hülse eingesetzt sind.

14. Leiste nach Anspruch 13, dadurch gekennzeichnet, daß die Druck-Steckstelle (6) zwei Endanschläge (64) jeweils an dem der Endstücke der Eingänge (63, 63') aufweist, das sich auf einer Fläche, obere Fläche genannt, der Druck-Steckstelle der offenen unteren Fläche (57) der Hülse (5) entgegengesetzt befindet.

15. Leiste nach einem der Ansprüche 13 und 14, dadurch gekennzeichnet, daß die Druck-Steckstelle (6) zwei seitliche Rillen (62) aufweist, die jeweils, in einer Fläche, seitliche Fläche genannt, der Steckstelle ausgeführt und alle beide entlang der Fläche offen sind, die der oberen Fläche der Druck-Steckstelle entgegengesetzt ist und untere Fläche genannt wird, die in die beiden Eingänge (63, 63') und auf die Fläche münden, die ihrer unteren Fläche entgegengesetzt ist und hintere Fläche genannt wird.

16. Leidte nach Anspruch 15, dadurch gekennzeichnet, daß jeder Verbinder (1) außerdem einerseits zwei Höcker (50B), die sich am Ende befinden und in die offene untere Fläche des hinteren Teils (51) der Hülse (5) vorstehen, und andererseits zwei Zweige (68) am Ende der unteren Fläche der Druck-Steckstelle (6), aber im wesentlichen an den beiden seitlichen Flächen zurückspringend, aufweist, wobei die untere Fläche der Steckstelle ein T-Relief (67) zwischen den seitlichen Rillen (62) definiert, zu dem die beiden Zweige gehören,

17. Leiste nach einem der Ansprüche 12 bis 16, dadurch gekennzeichnet, daß der vordere Teil (51) der Hülse (5) durch eine Zwischentrennwand (53), in der die beiden zweiten Kontakte (10) gehalten werden, in einen ausgesparten Zwischenteil (54) und einen ausgesparten stirnseitigen Teil (55) unterteilt ist, wobei die zweiten Kontakte mit zwei Haltezähnen (11AB) versehen sind, die einander entgegengesetzt sind und sich im wesentlichen in Höhe des Bodens der selbstreinigenden Hauptgabel jedes von ihnen befinden.

18. Leiste nach einem der Ansprüche 1 bis 17, dadurch gekennzeichnet, daß sie außerdem Schutzmodule (8) umfaßt, die jeweils auf einen der Verbinder aufsteckbar und mit einer Masseklemme (94) ausgestattet sind, die am Endstück einer Fläche zum Aufstecken des Moduls auf den Verbinder vorsteht.

19. Leiste nach einem der Ansprüche 1 bis 18, dadurch gekennzeichnet, daß sie außerdem Abschirmwände (100) aufweist, die im ersten Rand (31) an jeder der ersten Trennwände (3A) gehalten werden.
